# EUROPÄISCHE PATENTSCHRIFT

(11) **EP 1 140 953 B1**
(45) Veröffentlichungstag und Bekanntmachung des Hinweises auf die Patenterteilung: **22.01.2003**
(21) Anmeldenummer: 99957313.2
(22) Anmeldetag: 17.11.1999
(51) Int. Cl.: C07F 9/6558

(54) **VERFAHREN ZUR REINIGUNG VON THIAMINPHOSPHATEN**
METHOD OF PURIFYING THIAMINE PHOSPHATES
PROCEDE POUR PURIFIER DES PHOSPHATES DE THIAMINE

(30) Priorität: 17.12.1998 DE 19858269
(43) Veröffentlichungstag der Anmeldung: 10.10.2001
(73) Patentinhaber: MERCK PATENT GmbH, 64293 Darmstadt (DE)
(72) Erfinder: KRUMMRADT, Holger, D-64319 Pfungstadt (DE); BESCHMANN, Klaus, D-64354 Reinheim (DE); WARTENBERG, Frank-Hardi, D-64289 Darmstadt (DE); DIEKMANN, Horst, D-64295 Darmstadt (DE)
(86) Internationale Anmeldenummer: EP9908822
(87) Internationale Veröffentlichungsnummer: WO00035927

(56) Entgegenhaltungen:
- EP-A- 0 385 379
- DE-A- 2 056 076
- DE-B- 1 085 527
- GB-A- 793 753
- CHEMICAL ABSTRACTS, vol. 083, no. 13, 29. September 1975 (1975-09-29) Columbus, Ohio, US; abstract no. 112410, MUSHIKA Y: "Cocarboxylase" XP002131564 & JP 50 064485 - (TANABE SEIYAKU CO., LTD.;JAPAN)

## Beschreibung

Die Erfindung betrifft ein Verfahren zur Abtrennung von Phosphorsäure, Thiamintriphosphat und höheren Thiaminphosphaten aus Lösungen, die Phosphorsäure, Thiaminmonophosphat, -diphosphat, -triphosphat und höhere Phosphate enthalten, dadurch gekennzeichnet, daß man die phosphorsaure Lösung von Thiaminphosphaten über ein nicht-ionogenes Adsorberharz leitet, das ungesättigte cyclische Stickstoffbasen aufweist, und Thiaminmonophosphat und -diphosphat mit einem geeigneten Lösungsmittel eluiert.

Thiamindiphosphat (Cocarboxylase) ist Coenzym bei einer Reihe von Reaktionen, bei denen Kohlenstoff-Kohlenstoff-Bindungen gespalten werden, z. B. bei der oxidativen Decarboxylierung von Pyruvat zu Acetyl-CoA, von 2-Oxoglutarat zu Succinyl-CoA, im Kohlenhydrat-Stoffwechsel und bei Gärungsvorgängen.
Thiamindiphosphat wird zur Behandlung der Zuckerkrankheit, bei Leberkrankheiten, Herzinsuffizienz, Krampfanfällen, multipler Sklerose, Azidosen usw. eingesetzt.

Eine Produktion im großtechnischen Maßstab macht die möglichst wirtschaftliche und umweltverträgliche Darstellung erforderlich.
Üblicherweise wird Thiamindiphosphat durch Phosphorylierung von Thiamin gewonnen. Hierbei wird in der Regel ein Produktgemisch erhalten, daß sich je nach den Reaktionsbedingungen aus unterschiedlichen Anteilen von Thiaminmonophosphat, -diphosphat, -triphosphat, höheren Thiaminphosphaten und Phosphorsäure zusammensetzt.
Die Auftrennung des Produktgemisches erfolgt in vielen Fällen durch Anwendung von lonentauschern, die zu den Einzelkomponenten der Mischung eine unterschiedlich hohe Affinität aufweisen.

So wird beispielsweise in DE-A-1 085 527 beschrieben, daß man Mischungen, die Thiaminmonophosphat, -diphosphat, -triphosphat, höhere Thiaminphosphate und Phosphorsäure enthalten, dadurch auftrennen kann, daß man das Gemisch zuerst über einen schwach basischen Ionenaustauscher leitet, wodurch Phosphorsäure entfernt wird.
Anschließend wird das Gemisch nach einer nicht näher beschriebenen Hydrolyse des im Gemisch enthaltenen Thiamintriphosphates über einen Kationenaustauscher geführt, wobei Thiaminmonophosphat haften bleibt, während Thiamindiphosphat eluiert wird.
Nachteilig wirkt sich bei diesem Verfahren aus, daß das Thiamintriphosphat und im allgemeinen auch die höheren Thiaminphosphate in der Regel durch Hydrolyse oder ähnliche Maßnahmen aus der aufzutrennenden Mischung entfernt werden müssen, bevor auf dem Kationenaustauscher die Abtrennung des Thiaminmonophosphates vom Thiamindiphosphat erfolgen kann. Dies bedeutet einen weiteren Verfahrensschritt und ist für ein industrielles Verfahren unwirtschaftlich.

Ein ähnliches Verfahren wird in GB 793 753 beschrieben, das ebenfalls lonenaustauscher zur Auftrennung der Phosphorylierungsprodukte einsetzt. Hierbei wird Thiamintriphosphat durch fraktionierende Elution abgetrennt. Da die Thiamintri- und Tetraphosphate in der Regel eine sehr ähnliche Affinität zu den Ionenaustauschern aufweisen wie das Thiamindiphosphat, überschneidet sich die Elution des Diphosphats mit der der höheren Phosphate deutlich. Die Abtrennung höherer Thiaminhosphate ist daher in der Regel nur mit Ausbeuteeinschränkungen an Thiamindiphosphat durch entsprechend großzügige Fraktionierung des Eluats zu erreichen.

Ein in EP 0 385 379 B1 beschriebenes Verfahren, mit dessen Hilfe sich Thiaminmonophosphat aus Mischungen, die Thiaminmonophosphat, - diphosphat, -triphosphat, höhere Thiaminphosphate und Phosphorsäure enthalten, abtrennen läßt, schlägt ebenfalls vor, einen lonenaustauscher einzusetzen und Thiamindiphosphat und höhere Thiaminphosphate mit Wasser zu eluieren, während Thiaminmonophosphat auf dem lonentauscher verbleibt. Um das Wertprodukt Thiamindiphosphat zu erhalten, besteht wie in den zuvor genannten Verfahren jedoch die Notwendigkeit, das Thiamindiphosphat von den höheren Thiaminphosphaten nach bekannten Methoden zu befreien, was in der Regel nur durch Ausbeuteeinschränkungen an Thiamindiphosphat zu erreichen ist.

Es wurde jetzt gefunden, daß sich Phosphorsäure, Thiamintriphosphat und höhere Thiaminphosphate aus Lösungen, die Phosphorsäure, Thiaminmonophosphat, -diphosphat, -triphosphat und höhere Phosphate enthalten, abtrennen läßt, wenn man die phosphorsaure Lösung von Thiaminphosphaten über ein nicht-ionogenes Adsorberharz leitet, das ungesättigte cyclische Stickstoffbasen aufweist, und Thiaminmonophosphat und -diphosphat mit einem geeigneten Lösungsmittel eluiert.

Überraschenderweise verbleiben durch die Verwendung von Adsorberharzen, die ungesättigte cyclische Stickstoffbasen aufweisen, Phosphorsäure, Thiamintriphosphat und höhere Thiaminphosphate, im wesentlichen Tetraphosphat, auf dem Adsorber-Harz und/oder werden zum Thiamindiphosphat gespalten, während Thiaminmonophosphat und Thiamindiphosphat eluiert werden. Nach Entfernung des Lösungsmittels werden auf diese Weise Thiaminmonophosphat und -diphosphat bei nur sehr geringen Substanzverlusten in hoher Reinheit erhalten.

Sofern keine ausreichende Trennung von Thiaminmono- und -diphosphat durch fraktionierende Elution erreicht wird, können die auf diese Weise erhaltenen Mischungen von Thiamindiphosphat und Thiaminmonophosphat nach bekannten Methoden, die z. B. in DE-A-1 085 527, GB 793 753 oder EP 0 385 379 B1 beschrieben sind, auftrennt werden.
Vorzugsweise werden die Mischungen von Thiamindiphosphat und Thiaminmonophosphat dadurch getrennt, daß man ihre Lösungen über Kationenaustauscher wie z.B. Amberlite™ IRC 50, IR 100, IR 105 oder IR 120 oder über Kationentauscher, die Aminomethylen- und/oder Iminodimethylenphosphonsäurereste aufweisen, wie z.B. Lewatit OC 1060 der Firma Bayer, laufen läßt, da solche lonenaustauscher Thiaminmonophosphat festhalten und das Thiamindiphosphat durchlaufen lassen, so daß im wesentlichen Thiaminmonophosphat-freie Lösungen von Thiamindiphosphat erhalten werden.

Die nicht-ionogenen Adsoberharze sind synthetische in Wasser und organischen Lösungsmitteln unlösliche poröse Perlpolymerisate, wobei die funktionellen Gruppen einen je nach Typ und Aufbau des Polymers mehr oder weniger polaren Charakter aufweisen können. Diese Harze sind in der Lage, sowohl Anionen, Kationen als auch ungeladene Verbindungen zu adsorbieren.

Bevorzugt sind solche Adsorberharze, die in polymer gebundener Form die Grundgerüste der folgenden heterocyclischen Basen als funktionelle Gruppen aufweisen: Pyrrol, Indol, Pyridin, Chinolin, Isochinolin, Acridin, Pyridazin, Pyrimidin, Pyrazin, Chinoxalin, Pteridin, Purin, Pyrazol, Imidazol, Thiazol oder Oxazol. Vorzugsweise werden solche Adsorber-Harze für das erfindungsgemäße Verfahren verwendet, die im wesentlichen aus z. B. durch Divinylbenol oder Methylenbisacrylamid quervernetztem Poly(vinylpyrrol), Poly(vinylindol), Poly(vinylpyridin), Poly(vinylchinolin), Poly(vinylisochinolin), Poly(vinylacridin), Poly(vinylpyridazin), Poly(vinylpyridazin), Poly(vinylpyrimidin), Poly(vinylpyrazin), Poly(vinylchinoxalin), Poly(vinylpteridin), Poly(vinylpurin), Poly(vinylpyrazol), Poly(vinylmidazol), Poly(vinylthiazol) oder Poly(vinyloxazol) bestehen. Mischungen verschiedener Adsorber-Harze sind ebenfalls geeignet.

Gegenstand der Erfindung ist somit ein Verfahren zur Abtrennung von Phosphorsäure, Thiamintriphosphat und höheren Thiaminphosphaten aus Lösungen, die Phosphorsäure, Thiaminmonophosphat, -diphosphat, -triphosphat und höhere Phosphate enthalten, dadurch gekennzeichnet, daß man die phosphorsaure Lösung von Thiaminphosphaten über ein nicht-ionogenes Adsorberharz leitet, das ungesättigte cyclische Stickstoffbasen aufweist, und Thiaminmonophosphat und -diphosphat mit einem geeigneten Lösungsmittel eluiert.

Bevorzugter Gegenstand der Erfindung ist ein Verfahren zur Abtrennung von Phosphorsäure, Thiamintriphosphat und höheren Thiaminphosphaten aus Lösungen, die Phosphorsäure, Thiaminmonophosphat, -diphosphat, -triphosphat und höhere Phosphate enthalten, dadurch gekennzeichnet, daß man die Lösung von Thiaminphosphaten über ein nicht-ionogenes Adsorberharz leitet, dessen polymeres Gerüst aus Grundbausteinen aufgebaut ist, die mindestens eine der Gruppen der Formel I oder II aufweisen: 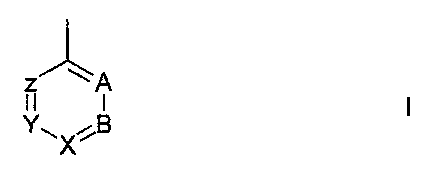 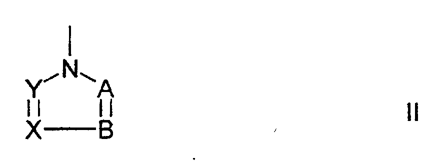 worin eine oder zwei der Gruppen A, B, X, Y und/oder Z die Bedeutung N aufweisen, während die restlichen Gruppen CR bedeuten und R unabhängig voneinander H, Halogen, Alkyl oder Alkoxy mit 1 bis 7 C-Atomen bedeutet
und Thiaminmonophosphat und -diphosphat mit einem geeigneten Lösungsmittel eluiert.

Bevorzugt weist nur einer der Reste A, B, X, Y oder Z die Bedeutung N auf.
In den bevorzugten Verbindungen der vor- und nachstehenden Gruppen der Formeln I oder II ist R H oder eine Alkylgruppe mit 1 bis 3 C-Atomen.
Besonders bevorzugt weist R die Bedeutung H auf.
Besonders bevorzugte Alkylgruppen sind n-Hexyl, n-Pentyl, n-Butyl, i-Butyl, n-Propyl, i-Propyl, Methyl und Ethyl, insbesondere Methyl und Ethyl.Besonders bevorzugte Alkoxygruppen sind n-Hexyloxy, n-Pentyloxy, n-Butyloxy, i-Butyloxy, Propyloxy, i-Propyloxy, Methoxy und Ethoxy, insbesondere Methoxy und Ethoxy.

Verbindungen der vor- und nachstehenden Formeln mit verzweigten Flügelgruppen R können von Bedeutung sein. Verzweigte Gruppen dieser Art enthalten in der Regel nicht mehr als zwei Kettenverzweigungen. R ist vorzugsweise eine geradkettige Gruppe oder eine verzweigte Gruppe mit nicht mehr als einer Kettenverzweigung.

Halogen bedeutet F, Cl, Br oder I, insbesondere F oder Cl.

Die bevorzugten Adsorberharze, die für das erfindungsgemäße Verfahren Verwendung finden, weisen Gruppen der Formel I oder II auf, in denen die Gruppen A, B, X, Y und/oder Z mindestens eine der bevorzugten Bedeutungen aufweisen.

Insbesondere bevorzugt werden nicht-ionogene Adsorber-Harze für das erfindungsgemäße Verfahren verwendet, deren polymeres Gerüst aus Grundbausteinen aufgebaut ist, die mindestens eine der Gruppen der Formel I1, I2, I3, I4, II1 oder II2 aufweisen:

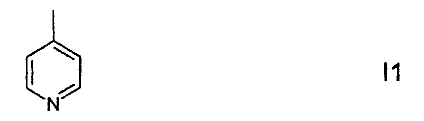

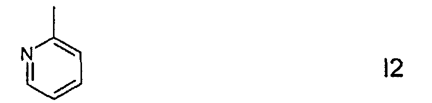

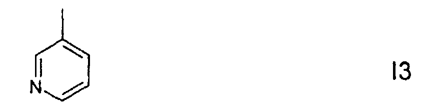

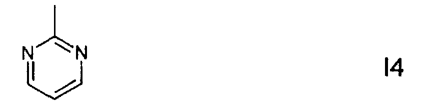

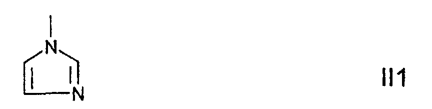

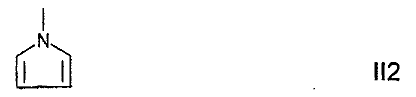

Ganz besonders bevorzugt werden Adsorber-Harze für das erfindungsgemäße Verfahren verwendet, deren polymeres Gerüst aus Grundbausteinen aufgebaut ist, die mindestens eine der Gruppen der Formel I1 oder II1 aufweisen.

Entsprechende Adsorber-Harze, die ungesättigte cyclische Stickstoffbasen als funktionelle Gruppen enthalten, sind bekannt und im Handel erhältlich (z.B. Fa Riedel-de-Haen, Seelze, Deutschland oder Reilly Industries Inc. Indianapolis) oder lassen sich analog zu bekannten Verfahren herstellen (z. B. Pure Appl. Chem. 1967, 15(3-4), 453-464, J. Polym. Sci., Polym. Lett. Ed. 1966, 4(11), 797-801 oder DE 20 56 076).

Besonders bevorzugt eignen sich die von der Firma Riedel-de-Haen unter der Bezeichnung Adsorber-Harz VP-8, VI-9 oder VI-15 oder die von der Firma Reilly unter dem Namen Reillex 402, Reillex 425, Reillex HP oder Reillex HPQ angebotene Adsorber-Harze, die Pyridyl-Gruppen der Formel I1 bzw. Imidazoyl-Gruppen der Formel II1 aufweisen.

Besonders bevorzugt ist das erfindungsgemäße Verfahren, das dadurch gekennzeichnet ist, daß man die Lösung von Thiaminphosphaten über eines oder mehrere der folgenden Adsorberharze leitet: Adsorber-Harz VP-8, VI-9 oder VI-15 von der Firma Riedel-de-Haen oder Reillex 402, Reillex 425, Reillex HP oder Reillex HPQ von der Firma Reilly Industries.

Diese Adsorber-Harze bestehen im wesentlichen aus quervernetztem Poly(4-vinylpyridin) oder Poly(n-vinylimidazol), das je nach Vernetzungsgrad mit unterschiedlichen Anteilen von Methylenbisacrylamid oder Divinylbenzol polymerisiert wurde.
Adsorber-Harze, die im wesentlichen aus quervernetztem Poly(4-vinylpyridin) bestehen, werden für das erfindungsgemäße Verfahren bevorzugt eingesetzt.

Die genannten Adsorber-Harze zeichnen sich durch eine besonders hohe Selektivität und überraschend hohe Kapazität zur Bindung von Phosphorsäure aus.

Die Phosphorsäureester des Thiamins werden z. B. nach DE 663 588, DE 704 172, DE 706 835, DE 708 514, DE 729 905, US 2 188 323 oder US 2 435 750 erhalten. Generell kann man aber auch von an sich bekannten, hier nicht näher erwähnten Varianten Gebrauch machen, um die Thiaminphosphate herzustellen.

Die Durchführung des erfindungsgemäßen Verfahrens ist einfach, wobei man die Lösung von Thiaminphosphaten, vorzugsweise einer Lösung von Thiaminphosphaten, wie sie z. B. bei der Phosphorylierung von Thiamin mit konzentrierter Phosphorsäure entsteht, gegebenenfalls wie in DE 1085 527 beschrieben von einem Überschuß Phosphorsäure befreit und diese Lösung vorzugsweise zwischen 5°C und 50°C, insbesondere bevorzugt bei Raumtermperatur über ein Adsorber-Harz leitet, das ungesättigte cyclische Stickstoffbasen aufweist und sich in einer üblichen Chromatographie-Säule befindet. Dabei entspricht das Säulenvolumen in der Regel etwa dem des Harz-Volumens.

Vorzugsweise wird mit einer Flußgeschwindigkeit von 1/5 des Säulenvolumens pro Stunde bis zu 3/4 des Säulenvolumens pro Stunde, bevorzugt mit 1/4 des Säulenvolumens pro Stunde bis zur Hälfte des Säulenvolumens pro Stunde eluiert.

Durch Elution mit einem geeigneten Lösungsmittel wird eine Lösung des Thiaminmonophosphats und -diphosphats erhalten. Es ist ebenfalls möglich, durch fraktionierende Elution eine Trennung des Monophosphates vom Diphosphat zu erreichen.

Vorzugsweise werden jedoch Thiaminmonophosphat und Thiamindiphosphat gemeinsam eluiert und eine Trennung dieser Thiaminphosphate nach den bekannten Methoden herbeigeführt.

Die Elution wird vorzugsweise durch pH-Kontrolle des Eluats verfolgt. Je nach verwendetem Adsorber-Harz erfolgt die Elution des Thiaminmonophosphats und Thiamindiphosphats in der Regel bei pH-Werten des Eluats zwischen pH 10 und pH 2, bevorzugt zwischen pH 9 und pH 3.
Durch Auffangen des Eluats, das einen pH-Wert zwischen den genannten Werten aufweist und Entfernung des Lösungsmittels können die Mischungen des Thiaminmonophosphats und Thiamindiphosphats als Feststoff erhalten werden.

Als Lösungsmittel zur Elution wird bevorzugt Wasser verwendet. Es ist aber ebenso möglich, mit Wasser mischbare organische Lösungsmittel einzusetzen. Dies sind beispielsweise Alkohole wie z.B. Methanol, Ethanol, iso-Propanol, Ketone wie Aceton oder Methylethylketon, Carbonsäuren wie z.B. Ameisensäure oder Essigsäure, organische Nitrile wie z.B. Acetonitril, Ether wie z.B. Tetrahydrofuran oder Dioxan, Sulfoxide wie z.B. Dimethylsulfoxid oder Amide wie z.B. N-Methylpyrrolidon oder N,N-Dimethylformamid. Mischungen der genannten Lösungsmittel können ebenfalls verwendet werden, insbesondere wäßrige Lösungen der genannten organischen Lösungsmittel.

Sofern als Eluens Wasser oder wäßrige Lösungen von organischen Lösungsmitteln eingesetzt werden, können dem Eluens anorganische Säuren wie Salzsäure oder Schwefelsäure zugesetzt werden.

Zur Regenerierung des Adsorber-Harzes nach der Elution von Thiaminmonophosphat und -diphosphat wird das Harz vorzugsweise mit einer Base gespült, um die im Harz gebundene Phosphorsäure und das Thiaminmonophosphat herauszuwaschen. Als Basen finden vorzugsweise Lösungen von Alkalihydroxiden und -carbonaten oder Stickstoffbasen Verwendung. Insbesondere werden wäßrige Lösungen von Kalium- oder Natriumhydroxid oder -carbonat oder wäßrige Ammoniak-Lösung eingesetzt. Ganz besonders bevorzugt eignet sich wäßrige Ammoniak-Lösung als Base zur Regeneration des Adsorber-Harzes. Die Ammoniak-Lösung ist vorzugsweise 0.5 bis 20%ig, insbesondere 1 bis 10%ig.

Vorzugsweise wird vor und nach der Behandlung des Adsorber-Harzes mit einer geeigneten Base das Harz mit Wasser gespült. Auf diese Weise wird vor dem Einsatz der Base ein Teil der auf dem Harz anhaftenden Phosphorsäure entfernt. Durch das Spülen nach Anwendung der Base wird ein eventueller Überschuß der Base entfernt.

Sofern als Base wäßrige Ammoniak-Lösung verwendet wird, hat es sich als zweckmäßig erwiesen, das bei der Regeneration des Adsorber-Harzes entstehende Ammoniumphosphat nach Entfernung des Lösungsmittels als Nebenprodukt zu gewinnen.

Durch das erfindungsgemäße Verfahren ist es möglich, Mischungen der Wertprodukte Thiaminmonophosphat und Thiamindiphosphat bei nur sehr geringen Substanzverlusten und in hoher Reinheit aus Mischungen, die durch Phosphorylierung von Thiamin erhalten werden, in einem einzigen Verfahrensschritt zu gewinnen.

Auch ohne weitere Ausführungsformen wird davon ausgegangen, daß ein Fachmann die obige Beschreibung im weitesten Umfang nutzen kann. Die bevorzugten Ausführungsformen sind deswegen lediglich als beschreibende, keineswegs als in irgendeiner Weise limitierende Offenbarung aufzufassen.
Das folgende Beispiel soll die Erfindung erläutern, ohne sie zu begrenzen. Vor- und nachstehend bedeuten Prozentangaben Gewichtsprozent. Alle Temperaturen sind in Grad Celsius angegeben.

### Beispiel:

2 kg Thiaminiumdichlorid werden auf übliche Weise phosphoryliert und die erhaltene Reaktionsmischung über eine lockere Schüttung von 40 I Adsorber-Harz Reillex HP geleitet. Anschließend wird mit Wasser eluiert, und die zwischen pH 9 und 3 aufgefangene Fraktion vom Lösungsmittel befreit. Die auf diese Weise erhaltene Mischung von Thiaminmonophosphat und Thiamindiphosphat ist im wesentlichen frei von Phosphorsäure, Thiamintriphosphat und höheren Thiaminphosphaten.

Zur Regenerierung des Adsorber-Harzes wird das Harz zunächst mit Wasser und anschließend mit wäßriger Ammoniak-Lösung gespült, bis die ausfließende Lösung einen pH-Wert von etwa 12 erreicht hat. Sobald nach erneuter Spülung mit Wasser die ausfließende Lösung einen pH-Wert von 9 bis 7 erreicht hat, ist das Harz wieder einsatzbereit.

## Patentansprüche

1. Verfahren zur Abtrennung von Phosphorsäure, Thiamintriphosphat und höheren Thiaminphosphaten aus Lösungen, die Phosphorsäure, Thiaminmonophosphat, -diphosphat, -triphosphat und höhere Phosphate enthalten, **dadurch gekennzeichnet, daß** man die phosphorsaure Lösung von Thiaminphosphaten über ein nicht-ionogenes Adsorberharz leitet, das ungesättigte cyclische Stickstoffbasen aufweist, und Thiaminmonophosphat und -diphosphat mit einem geeigneten Lösungsmittel eluiert.

2. Verfahren nach Anspruch 1, **dadurch gekennzeichnet, daß** man die Lösung von Thiaminphosphaten über ein nicht-ionogenes Adsorberharz leitet, dessen polymeres Gerüst aus Grundbausteinen aufgebaut ist, die mindestens eine der Gruppen der Formel I oder II aufweisen: 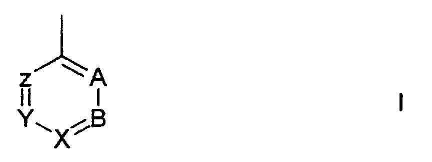 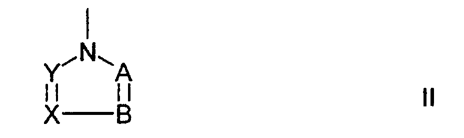 worin einer oder zwei der Gruppen A, B, X, Y und/oder Z die Bedeutung N aufweisen, während die restlichen Gruppen CR bedeuten und
R unabhängig voneinander H, Halogen, Alkyl oder Alkoxy mit 1 bis 7 C-Atomen bedeutet.

3. Verfahren nach Anspruch 1 oder 2, **dadurch gekennzeichnet, daß** man die Lösung von Thiaminphosphaten über ein nicht-ionogenes Adsorberharz leitet, dessen polymeres Gerüst aus Grundbausteinen aufgebaut ist, die mindestens eine der Gruppen der Formel I1, I2, I3, I4, II1 oder II2 aufweisen:

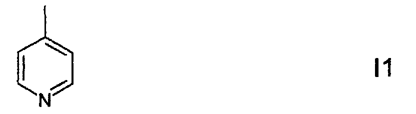

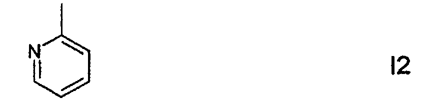

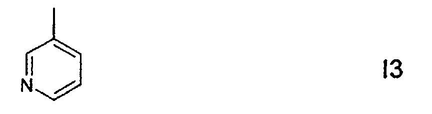

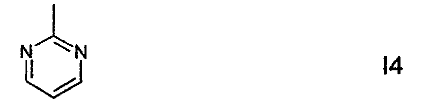

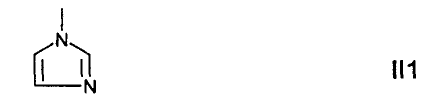

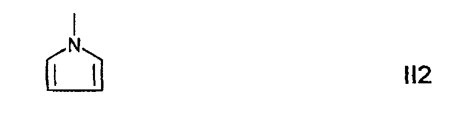

4. Verfahren nach einem der Ansprüche 1, 2 oder 3, **dadurch gekennzeichnet, daß** man die Lösung von Thiaminphosphaten bei Temperaturen zwischen 5°C und 50°C über ein Adsorber-Harz leitet und mit Wasser eluiert.

5. Verwendung der durch das Verfahren nach einem der vorhergehenden Ansprüche erhaltenen Mischungen von Thiaminmonophosphat und Thiamindiphosphat zur Herstellung von im wesentlichen Thiaminmonophosphat-freien Lösungen von Thiamindiphosphat.

## Claims

1. Process for the separation of phosphoric acid, thiamine triphosphate and higher thiamine phosphates from solutions which contain phosphoric acid and thiamine monophosphate, diphosphate, triphosphate and higher phosphates, **characterized in that** the phosphoric acid solution of thiamine phosphates is passed over a nonionic adsorber resin which contains unsaturated cyclic nitrogen bases, and thiamine monophosphate and diphosphate are eluted using a suitable solvent.

2. Process according to Claim 1, **characterized in that** the solution of thiamine phosphates is passed over a nonionic adsorber resin whose polymeric structure is built up of base units which contain at least one of the groups of the formula I or II: 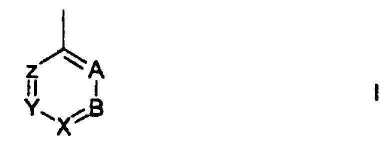 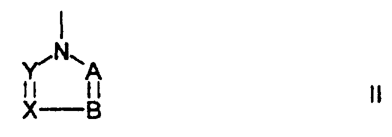 in which one or two of the groups A, B, X, Y and/or Z have the meaning N, while the remaining groups are CR and
R independently of one another is H, halogen, alkyl or alkoxy having 1 to 7 C atoms.

3. Process according to Claim 1 or 2, **characterized in that** the solution of thiamine phosphates is passed over a nonionic adsorber resin whose polymeric structure is built up of base units which contain at least one of the groups of the formula I1, I2, I3, I4, II1 or II2:

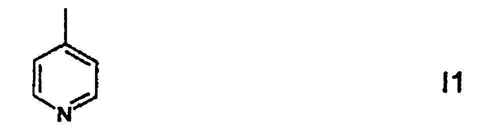

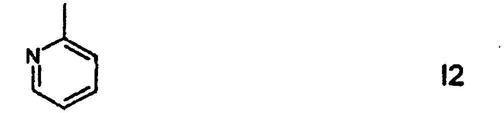

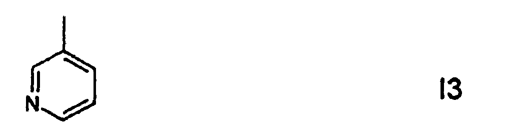

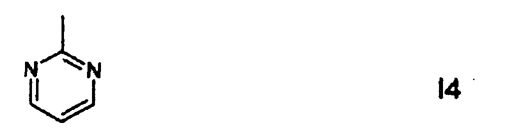

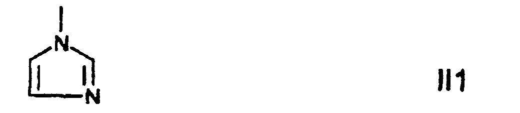

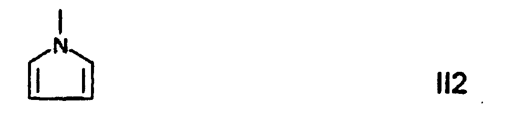

4. Process according to one of Claims 1, 2 or 3, **characterized in that** the solution of thiamine phosphates is passed over an adsorber resin at temperatures between 5°C and 50°C and eluted using water.

5. Use of the mixtures of thiamine monophosphate and thiamine diphosphate obtained according to one of the preceding claims for the preparation of essentially thiamine monophosphate-free solutions of thiamine diphosphate.

## Revendications

1. Procédé de séparation d'acide phosphorique, de triphosphate de thiamine et de phosphates de thiamine supérieurs à partir de solutions contenant de l'acide phosphorique, de monophosphate de thiamine, de diphosphate de thiamine et de triphosphate de thiamine, ainsi que des phosphates supérieurs, **caractérisé en ce que** l'on amène la solution d'acide phosphorique de. phosphates de thiamine sur une résine adsorbante non-ionogène composée de bases azotées cycliques insaturées, et **en ce que** le monophosphate de thiamine et le diphosphate de thiamine sont élués avec un solvant approprié.

2. Procédé selon la revendication 1, **caractérisé en ce qu'**on amène la solution de phosphates de thiamine sur une résine adsorbante non-ionogène, dont la structure polymère se compose d'éléments fondamentaux présentant au moins l'un des groupes de formule I ou II : 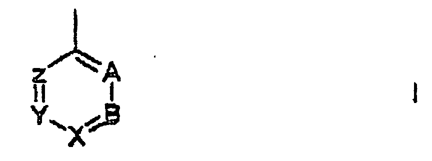 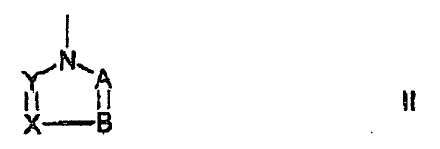 dans laquelle un ou deux des groupes A, B, X, Y et/ou Z désigne(nt) N, alors que les autres groupes désignent CR et
R désigne, indépendamment les uns des autres H, un halogène, un groupe alkyle ou alcoxy comprenant de 1 à 7 atomes de C.

3. Procédé selon la revendication 1 ou 2, **caractérisé en ce qu'**on amène la solution de phosphates de thiamine sur une résine adsorbante non-ionogène, dont la structure polymère se compose d'éléments fondamentaux présentant au moins l'un des groupes de formule I1, I2, I3, I4, II1 ou II2 :

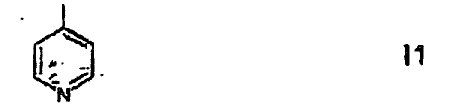

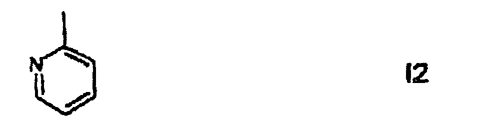

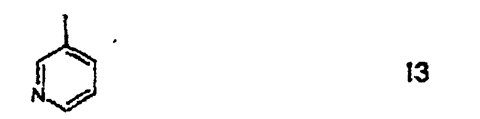

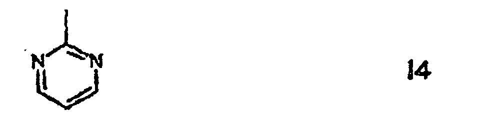

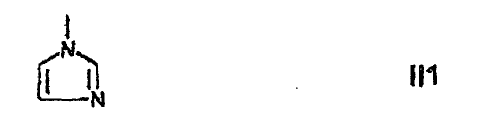

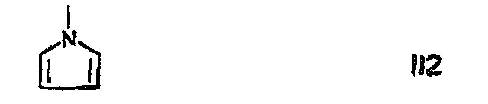

4. Procédé selon l'une des revendications 1, 2 ou 3, **caractérisé en ce qu'**on amène la solution de phosphates de thiamine sur une résine adsorbante à une température comprise entre 5°C et 50°C et **en ce qu'**on l'élue avec de l'eau.

5. Utilisation des mélanges de monophosphate de thiamine et de diphosphate de thiamine obtenus par le procédé selon l'une quelconque des revendications précédentes, pour préparer des solutions de diphosphate de thiamine sensiblement sans monophosphate de thiamine.
